# EUROPÄISCHE PATENTSCHRIFT

(11) **EP 2 730 172 B1**
(45) Veröffentlichungstag und Bekanntmachung des Hinweises auf die Patenterteilung: **28.06.2017**
(21) Anmeldenummer: 13191806.2
(22) Anmeldetag: 06.11.2013
(51) Int. Cl.: A23G 3/02, A23G 3/34, A23G 3/54

(54) **Gießverfahren für Fruchtgummi**
Casting method for fruit gums
Procédé de coulage des gommes à fruits

(30) Priorität: 08.11.2012 DE 102012220327
(43) Veröffentlichungstag der Anmeldung: 14.05.2014
(73) Patentinhaber: Mederer GmbH, 90763 Fürth (DE)
(72) Erfinder: Mederer, Herbert, 90768 Fürth (DE)
(74) Vertreter: Rau, Schneck & Hübner Patentanwälte Rechtsanwälte PartGmbB

(56) Entgegenhaltungen:
- EP-A1- 0 548 814
- EP-A1- 1 327 391
- DE-A1- 4 004 688
- DE-C- 426 373
- DE-U- 1 757 920
- GB-A- 701 841
- US-A- 2 578 361
- US-A- 3 233 562

## Beschreibung

Die Erfindung betrifft ein Verfahren zur Herstellung von Fruchtgummi-Artikeln mit mindestens einer Gieß-Form.

Furchtgummi-Artikel sind durch offenkundige Vorbenutzung bekannt. Diese enthalten im Allgemeinen Glukosesirup, Zucker, Gelatine und andere Geliermittel. Ferner enthalten diese in der Regel färbende Lösungen, Aromen und Säuerungsmittel. Zur Herstellung der Fruchtgummi-Artikel wird bekanntlich eine, die obigen Bestandteile enthaltende, spezielle GießMasse in Formpuder eingegossen und dann weiterbehandelt. Die Fruchtgummi-Artikel gemäß dem Stand der Technik haben im Allgemeinen eine flache und eine entsprechend spezifisch geformte Seite, was optisch nicht sonderlich ansprechend ist.

Die DE 40 04 688 A1 offenbart ein gattungsgemäßes Gießverfahren zur Herstellung eines Fruchtgummibonbons. Dazu wird Bonbonmasse in mindestens eine von zwei Halbformen eingegossen. Anschließend werden die Halbformen zur Endformung der Bonbons zusammengefügt. So sind Fruchtgummibälle herstellbar.

Aus der DE 426 373 C ist eine Form zur Herstellung von Stielbonbons bekannt. Die Bonbonkörper können beispielsweise eiförmig, zapfenförmig, kugelförmig oder dergleichen gestaltet sein. Die Form besteht aus zwei aufeinander legbare Platten, in welche je zur Hälfte die Form eines Stielbonbons eingraviert ist. Von jeder eingravierten Form geht eine rillenartige Verlängerung zu dem Rand der Platte. In der oberen Platte ist für jede Form ein kegeliges Gießloch und ein Luftauslaufloch vorgesehen. Die flüssige Gießmasse kann durch die Gießlöcher in die Formen einlaufen.

Die EP 0 548 814 A1 offenbart Vorrichtungen zum Herstellen dreidimensionaler dekorativer Gießkörper. Die Gießkörper können Zucker enthaltende Süßwaren sein. Über eine Sprühdüse und eine Öffnung in einer Form wird zu vergießendes Material in die Form eingebracht.

Gemäß der US 3,233,562 wird Fluidmaterial in eine Gießform eingebracht und dann gekühlt. Eine Gießform hat ein oberes Teil und ein unteres Teil. Jedes Teil ist mit einer Vielzahl von Teil-Aussparungen ausgebildet, um zusammen jeweilige Gesamt-Aussparungen zu bilden. Die Teil-Aussparungen in dem unteren Teil sind mit Lüftungsöffnungen versehen, die mit der Umgebung kommunizieren. An der oberen Fläche des oberen Teils sind Einlassöffnungen vorgesehen. Nahrungsmittel, wie Schokolade oder Eiscreme, sind so herstellbar.

Die EP 1 327 391 A1 offenbart eine Weich-Bonbon-Einheit. Zwei Halbschalen sind mit einem jeweils in diese eingegossenen halbkugelförmigen Teil-Körper gefüllt. In der einen Halbschale besteht dieser Teil-Körper ausschließlich aus Weich-Schaumzucker-Masse, während in die andere Halbschale ein Kugelsegment aus essbarer Gummi-Masse eingegossen ist.

Aus der US 2,578,361 sind Formen für Eiscreme, Konfekt, Gelatine oder dergleichen bekannt. Eine Gießform kann beispielsweise durch zwei Plattenelemente gebildet sein, die jeweils mit Vertiefungen versehen sind, um gemeinsam einen Artikel zu bilden.

Die GB 701 841 A offenbart Behälter zum Gießen von Marmelade oder dergleichen.

Eine aus der DE 1 757 920 U bekannte Gießform hat zwei gegeneinander zentrierte und lösbar miteinander zu verbindende Formhälften. Beide Formhälften weisen nach innen offene Formvertiefungen auf. Mit der Gießform können beispielsweise Schokoladenerzeugnisse hergestellt werden.

Der Erfindung liegt daher die Aufgabe zugrunde, ein Verfahren zu liefern, das eine einfache Herstellung optisch äußerst ansprechender Fruchtgummi-Artikel erlaubt. Mit dem Verfahren soll auch eine kostengünstige Massenfertigung entsprechender Fruchtgummi-Artikel möglich sein.

Diese Aufgabe wird erfindungsgemäß durch die in dem unabhängigen Anspruch 1 angegebenen Merkmale gelöst. Der Kern der Erfindung liegt darin, dass die Gieß-Form Formkammern begrenzende Gieß-Formkörper umfasst. In die durch die jeweils benachbart angeordneten, ersten und zweiten Formkammern gebildeten Gesamt-Formkammern ist gießfähige Fruchtgummi-Masse über die Fruchtgummi-Masse-Einfüllöffnungen einbringbar. Es ist von Vorteil, wenn bei jeder zweiten Formkammer eine Fruchtgummi-Masse-Zufuhröffnung vorgesehen ist. Vorzugsweise ist jede Fruchtgummi-Masse-Zuführöffnung in einem Kopfbereich der jeweiligen zweiten Formkammer vorgesehen. Die Fruchtgummi-Masse enthält mindestens ein Geliermittel, das zu einer Gelierung führt und einen geleeartigen bzw. gallertartigen Fruchtgummi-Artikel bildet. Es ist von Vorteil, wenn das mindestens eine Geliermittel Pektin ist. Das Einbringen erfolgt vorzugsweise durch Gießen bzw. Spritzgießen. Die Fruchtgummi-Artikel werden also durch ein Urformverfahren bzw. Urformen hergestellt. Aus der gießfähigen Fruchtgummi-Masse entsteht nach dem Erstarren bzw. Abkühlen ein handhabbarer, körperlicher Fruchtgummi-Artikel. Günstigerweise erfolgt zunächst eine Schockkühlung der Fruchtgummi-Masse in der Gieß-Form.

Das mindestens eine Geliermittel sorgt für eine erste Stabilität. Es ist von Vorteil, wenn auch ein Trocknen der Fruchtgummi-Artikel erfolgt. Die Form der Fruchtgummi-Artikel ist durch die Form der Gesamt-Formkammern bestimmt.

Die Fruchtgummi-Masse ist bei dem Gießvorgang gießfähig. Sie weist dann eine dynamische Viskosität auf, die zwischen 500 mPa·s und 6.000 mPa·s, bevorzugter zwischen 1.000 mPa·s und 4.000 mPa·s liegt. Die Fruchtgummi-Masse hat dann eine Dichte, die in etwa zwischen 0,7 kg/dm³ und 1,7 kg/dm³ liegt. Es kann eine oder mehrere Fruchtgummi-Massen vorgesehen sein.

Das Abkühlen bzw. Erstarren der Fruchtgummi-Artikel erfolgt vorzugsweise in mindestens einer Kühl-Vorrichtung bzw. mindestens einem Kühl-Raum. Das etwaige Trocknen der Fruchtgummi-Artikel erfolgt vorzugsweise in mindestens einer Trocknungs-Vorrichtung bzw. mindestens einem Trocknungs-Raum.

Günstigerweise wird beim Trocknen den Fruchtgummi-Artikeln Feuchtigkeit bzw. Wasser entzogen. Es ist von Vorteil, wenn das Trocknen durch Umspülen der Fruchtgummi-Artikel mit einem trockenen Gas bzw. Gas-Gemisch, wie Luft, erfolgt. Es ist zweckmäßig, wenn sich die Fruchtgummi-Artikel beim Trocknen auf mindestens einem Gitter-Element in mindestens einer Trockungs-Vorrichtung bzw. in mindestens einem Trocknungs-Raum befinden und das Gas bzw. Gas-Gemisch durch das mindestens eine Gitter-Element zum Trocknen der Fruchtgummi-Artikel strömt. Die Trocknung erfolgt also günstigerweise puderfrei.

Es ist von Vorteil, wenn die ersten Formkammern in ersten Reihen und/oder Spalten in dem ersten Gieß-Formkörper angeordnet sind. Vorzugsweise sind auch die zweiten Formkammern in zweiten Reihen und/oder Spalten in dem zweiten Gieß-Formkörper angeordnet. Es sind mehrere erste Formkammern vorhanden. Außerdem sind mehrere zweite Formkammern vorgesehen.

Es ist zweckmäßig, wenn die Gieß-Formen aufeinander stapelbar sind. Vorzugsweise sind die ersten und/oder zweiten Gieß-Formkörper aufeinander stapelbar. Es ist von Vorteil, wenn an dem ersten und/oder zweiten Gieß-Formkörper mindestens ein Stapel-Vorsprung vorgesehen ist, der imstande ist, sich gegenüber dem ersten und/oder zweiten Gieß-Formkörper abzustützen. Vorteilhafterweise ist der mindestens eine Stapel-Vorsprung rückseitig, also auf der Seite angeordnet, die gegenüberliegend zu der die Öffnungen der Formkammern aufweisenden Seite ist.

Vorzugsweise sind der erste und zweite Gieß-Formkörper in ihrer zusammengesetzten Schließposition quer zu einander fixiert. Mindestens ein Formschluss-Element an dem ersten Gieß-Formkörper greift günstigerweise in mindestens ein Formschluss-Gegenelement an dem zweiten Gieß-Formkörper formschlüssig ein, so dass der erste Gieß-Formkörper und der zweite Gieß-Formkörper relativ zueinander quer fixiert bzw. unbeweglich sind. Gemäß einer alternativen Ausführungsform ist das mindestens eine Formschluss-Element und das mindestens eine Formschluss-Gegenelement vertauscht zueinander angeordnet.

Es ist von Vorteil, wenn der erste Teil des Fruchtgummi-Artikels eine erste Hälfte und der zweite Teil des Fruchtgummi-Artikels eine zweite Hälfte ist.

Es ist von Vorteil, wenn die Fruchtgummi-Artikel eine Breitenabmessung, bevorzugter einen Durchmesser aufweisen, die/der zwischen 5 mm und 50 mm, bevorzugter zwischen 10 mm und 30 mm, liegt.

Die Fruchtgummi-Artikel können eine Füllung haben, die sich vorzugsweise in Zusammensetzung bzw. Geschmack von der Fruchtgummi-Masse des übrigen Fruchtgummi-Artikels unterscheidet. Eine Ausgestaltung ohne Füllung ist aber auch möglich.

Vorzugsweise ist die Gieß-Form mindestens im Bereich der Formkammern mit einer Antihaft-Beschichtung beschichtet.

Es ist zweckmäßig, wenn die die ersten Formkammern begrenzenden ersten Wandungen des ersten Gieß-Formkörpers und/oder die die zweiten Formkammern begrenzenden zweiten Wandungen des zweiten Gieß-Formkörpers zumindest bereichsweise strukturiert sind. Dafür sind vorzugsweise Vertiefungen und/oder Vorsprünge an den Wandungen vorgesehen. Es sind so Fruchtgummi-Artikel herstellbar, die eine entsprechend strukturierte Oberfläche bzw. einen entsprechend strukturierten Oberflächen-Bereich haben, was optisch äußerst ansprechend ist. Beispielsweise sind so Darstellungen von Nähten bzw. Feldern, wie bei Bällen, vorzugsweise wie bei Tennisbällen, Fußbällen oder dergleichen, auf den Fruchtgummi-Artikeln erzeugbar.

Weitere vorteilhafte Ausgestaltungen der Erfindung sind in den Unteransprüchen angegeben.

Die Ausgestaltung nach Anspruch 2 erlaubt eine äußerst schnelle und einfache sowie funktionssichere Entfernung der Fruchtgummi-Artikel aus den zweiten Formkammern.

Das Trennmittel gemäß Anspruch 3 ermöglicht ebenfalls ein äußerst einfaches und schnelles Entfernen der Fruchtgummi-Artikel aus den Formkammern. Ein Anhaften der Fruchtgummi-Artikel an der Gieß-Form ist so auf einfache Art und Weise besonders gut vermeidbar. Das Trennmittel kann auch als Antihaftmittel mit großer Trennwirkung bezeichnet werden.

Die Ausgestaltung nach Anspruch 8 führt zu Fruchtgummi-Artikeln, die äußerst schnell bzw. wirtschaftlich und optisch ansprechend herstellbar sind.

Auch die Ausgestaltung nach Anspruch 9 erlaubt eine äußerst schnelle bzw. wirtschaftliche Herstellung der Fruchtgummi-Artikel.

Gemäß Anspruch 10 bildet der erste Gieß-Formkörper ein Unterteil, während der zweite Gieß-Formkörper ein Oberteil ist. Diese Ausgestaltung ermöglicht eine besonders einfache Herstellung der Fruchtgummi-Artikel. Andere Orientierungen der Gieß-Formkörper sind alternativ möglich.

Die Ausgestaltung nach Anspruch 11 führt ebenfalls zu einer äußerst einfachen und wirtschaftlichen Herstellung von Fruchtgummi-Artikeln. Alternativ sind mehr oder weniger erste Formkammern als zweite Formkammern vorgesehen. Beispielsweise teilen sich zwei erste Formkammern eine zweite Formkammer.

Durch die Ausgestaltung nach den Ansprüchen 12 bzw. 13 sind die Gieß-Formkörper äußerst kostengünstig herstellbar. Ferner ist so eine äußerst einfache Herstellung der Fruchtgummi-Artikel möglich.

Durch die ersten Formkammern gemäß Anspruch 14 sind Fruchtgummi-Artikel herstellbar, die ein Kugelsegment umfassen.

Durch die zweiten Formkammern gemäß Anspruch 15 sind Fruchtgummi-Artikel herstellbar, die ein Kugelsegment umfassen. Vorzugsweise sind die Fruchtgummi-Artikel kugelförmig bzw. murmelartig. Alternativ sind die ersten und zweiten Formkammern derart ausgeführt, dass eiförmige oder ellipsoide Fruchtgummi-Artikel oder Kombinationen davon herstellbar sind. Die Fruchtgummi-Artikel können aber auch Früchten, Tieren, menschenartigen Figuren, Fahrzeugen, anderen geometrischen Formen oder dergleichen nachempfunden sein. Die ersten und zweiten Formkammern haben dafür eine entsprechende Gestalt bzw. Form.

Gemäß Anspruch 15 sind die Fruchtgummi-Masse-Zuführöffnungen in dem Kopfbereich der zweiten Formkammern angeordnet. Dies führt zu einer besonders einfachen Herstellung der Fruchtgummi-Artikel. Gemäß einer alternativen Ausführungsform sind die Fruchtgummi-Masse-Zuführöffnungen seitlich in den zweiten Formkammern angeordnet.

Nachfolgend wird unter Bezugnahme auf die beigefügte Zeichnung eine bevorzugte Ausführungsform der Erfindung beispielhaft beschrieben. Dabei zeigen:
- Fig. 1: eine Draufsicht auf einen zweiten Gieß-Formkörper der erfindungsgemäßen Gieß-Form,
- Fig. 2: eine Seitenansicht des in Fig. 1 gezeigten, zweiten Gieß-Formkörpers,
- Fig. 3: eine Draufsicht auf einen ersten Gieß-Formkörper der erfindungsgemäßen Gieß-Form,
- Fig. 4: eine Seitenansicht des in Fig. 3 gezeigten, ersten Gieß-Formkörpers,
- Fig. 5: eine Seitenansicht eines ersten Gieß-Formkörpers und einer die Gieß-Formkörper gemäß den Fig. 1 bis 4 umfassenden Gieß-Form, die aufeinander gestapelt sind,
- Fig. 6: einen Schnitt durch die in Fig. 5 gezeigte Stapel-Anordnung entsprechend der Schnittlinie VI-VI in Fig. 5,
- Fig. 7: eine erfindungsgemäße Gieß-Vorrichtung mit der erfindungsgemäßen Gieß-Form,
- Fig. 8: eine vergrößerte Darstellung des Einfüll-Bereichs der in Fig. 7 dargestellten Gieß-Vorrichtung, und
- Fig. 9: eine stark vereinfachte Fertigungslinie, die die in Fig. 7 gezeigte Gieß-Vorrichtung umfasst.

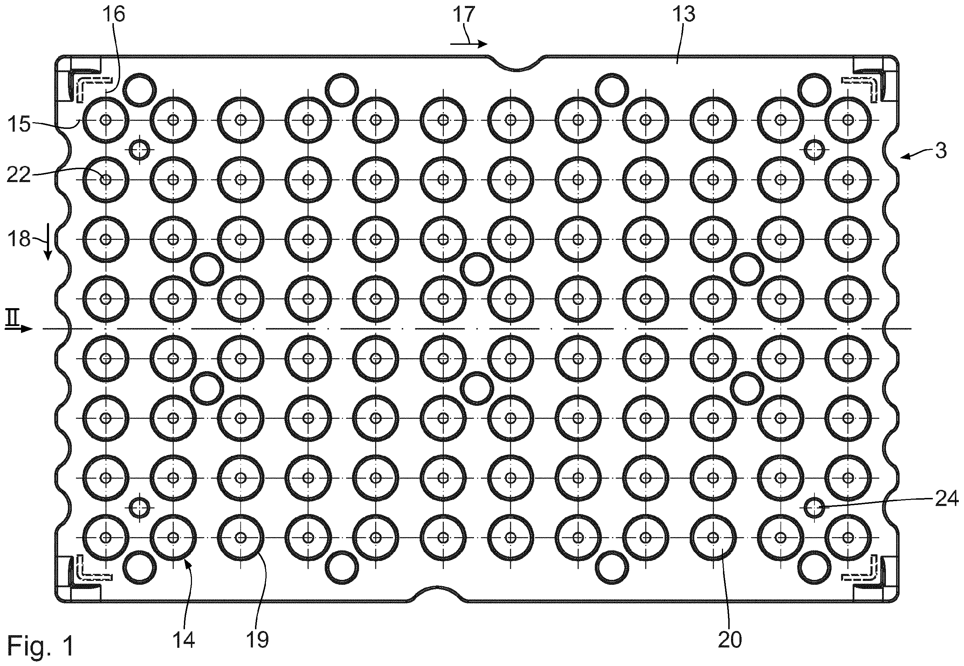

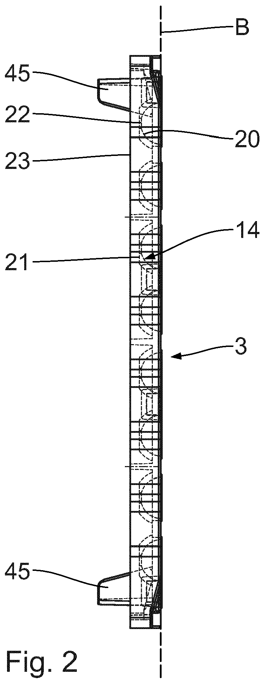

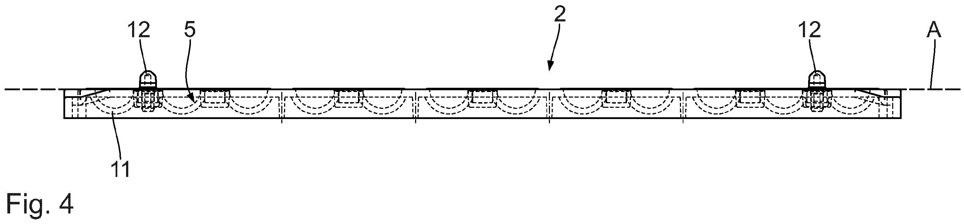

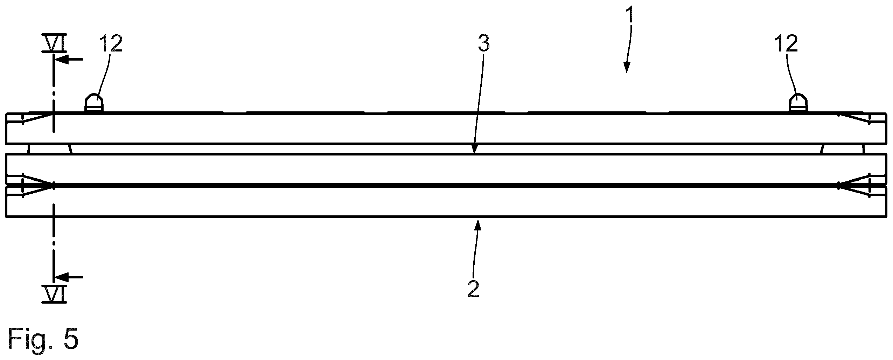

Zunächst wird unter Bezugnahme auf die Fig. 1 bis 6 eine Gieß-Form 1 im zusammengesetzten Zustand bzw. in der Schließposition beschrieben. Die Gieß-Form 1 umfasst einen ersten Gieß-Formkörper 2 und einen zweiten Gieß-Formkörper 3, die lösbar miteinander verbindbar sind.

Der erste Gieß-Formkörper 2 ist starr und im Wesentlichen rechteckig ausgebildet. Er ist vorzugsweise aus einem Werkstoff wie beispielsweise Polycarbonat, Teflon oder einem Silikonwerkstoff hergestellt. Der erste Gieß-Formkörper 2 bildet das Unterteil der zusammengesetzten Gieß-Form 1.

Der erste Gieß-Formkörper 2 weist eine im Wesentlichen planare, erste Oberfläche 4 auf, die in einer ersten Hauptebene A liegt.

Der erste Gieß-Formkörper 2 hat mehrere schalenförmige, halbkugelkalottenartige Vertiefungen 5, die beabstandet zueinander platziert sind und vorzugsweise identisch zueinander geformt sind. Die Vertiefungen 5 bilden erste Formkammern. Sie sind in ersten Zeilen 6 und ersten Spalten 7 angeordnet. Die ersten Zeilen 6 erstrecken sich in der Längsrichtung 8 des ersten Gieß-Formkörpers 2, während sich die ersten Spalten 7 in der Breitenrichtung 9 des ersten Gieß-Formkörpers 2 erstrecken. Insgesamt sind hier 96 Vertiefungen 5 vorgesehen, die in acht Zeilen 6 und zwölf Spalten 7 vorgesehen sind. Eine andere Anordnung bzw. Anzahl von Zeilen 6, Spalten 7 und/oder Vertiefungen 5 ist alternativ möglich.

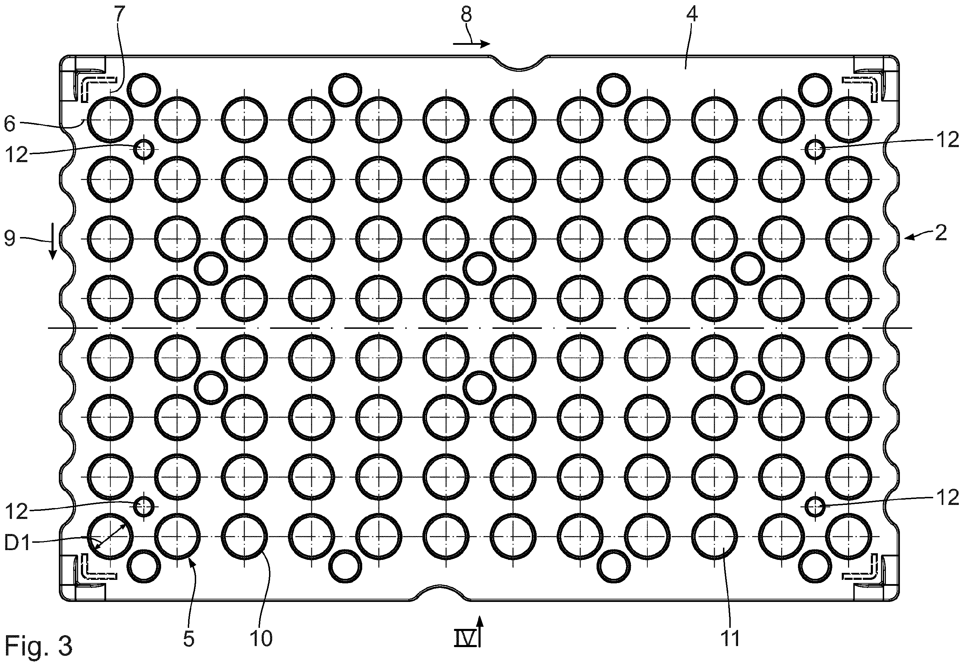

Die Vertiefungen 5 haben in der Hauptebene A, wie auch aus der Draufsicht gemäß Fig. 3 hervorgeht, jeweils eine erste Kreisfläche und sind dort offen. Die Vertiefungen 5 gehen jeweils von der ersten Oberfläche 4 nach unten. Dabei hat jede Vertiefung 5 einen in der ersten Hauptebene A verlaufenden, eine geschlossene Kurve bildenden, ersten Begrenzungsrand 10, der jeweils die geschlossene Kontur der Vertiefungen 5 bestimmt. An jeden ersten Begrenzungsrand 10 einer Vertiefung 5 schließt sich eine Vertiefungs-Wandung 11 an, die die betreffende Vertiefung 5 nach unten und seitlich begrenzt. Jede Vertiefung 5 hat im Querschnitt eine in etwa halbkreisförmige Form. Der Querschnitt verläuft dabei senkrecht zu der ersten Hauptebene A. Die Tiefe senkrecht zu der ersten Hauptebene A nimmt so von dem ersten Begrenzungsrand 10 bis zu der Mitte der jeweiligen Vertiefung 5 zu.

Die Vertiefungen 5 haben beispielsweise einen ersten Durchmesser D1, der zwischen 5 mm und 50 mm, bevorzugter zwischen 10 mm und 30 mm, noch bevorzugter zwischen 13 mm und 25 mm, liegt.

Der erste Gieß-Formkörper 2 hat ferner erste Formschluss-Elemente 12, die von der ersten Oberfläche 4 nach oben vorspringen. Die ersten Formschluss-Elemente 12 sind gemäß dieser Ausführungsform zapfen- bzw. stiftartig ausgeführt. Sie sind vorzugsweise im Wesentlichen in den Eckbereichen des ersten Gieß-Formkörpers 2 angeordnet. Sie können aber auch an anderen Stellen vorgesehen sein.

Der zweite Gieß-Formkörper 3 ist wieder starr und im Wesentlichen rechteckig ausgeführt. Die Größe und Kontur des zweiten Gieß-Formkörpers 3 entspricht im Wesentlichen der Größe und Kontur des ersten Gieß-Formkörpers 2. Vorzugsweise ist der zweite Gieß-Formkörper 3 aus dem gleichen Material hergestellt wie der erste Gieß-Formkörper 2. Der zweite Gieß-Formkörper 3 bildet das Oberteil der zusammengesetzten Gieß-Form 1.

Der zweite Gieß-Formkörper 3 hat eine im Wesentlichen planare, zweite Oberfläche 13, die in einer zweiten Hauptebene B liegt.

Der zweite Gieß-Formkörper 3 weist mehrere kuppenartige bzw. domartige Formkammern 14 auf, die beabstandet zueinander angeordnet sind und vorzugsweise identisch zueinander geformt sind. Die zweiten Formkammern 14 sind halbkugelkalottenartig. Sie sind in dem zweiten Gieß-Formkörper 3 in zweiten Zeilen 15 und zweiten Spalten 16 angeordnet. Die zweiten Zeilen 15 verlaufen in der Längsrichtung 17 des zweiten Gieß-Formkörpers 3, während sich die zweiten Spalten 16 in der Breitenrichtung 18 des zweiten Gieß-Formkörpers 3 erstrecken. Die zweiten Formkammern 14 sind entsprechend den Vertiefungen 5 angeordnet und sind vorzugsweise auch im Wesentlichen identisch zu diesen geformt und dimensioniert.

Die Anzahl der zweiten Formkammern 14 ist gleich mit der Anzahl der Vertiefungen 5.

Die zweiten Formkammern 14 gehen jeweils von der zweiten Oberfläche 13 nach oben und sind bei dieser offen. Dabei haben die zweiten Formkammern 14 jeweils einen in der zweiten Hauptebene B verlaufenden, eine geschlossene Kurve bildenden, zweiten Begrenzungsrand 19, der die geschlossene Kontur der zweiten Formkammern 14 bestimmt. An jeden zweiten Begrenzungsrand 19 einer zweiten Formkammer 14 schließt sich eine Kuppel-Wandung 20 an, die die betreffende zweite Formkammer 14 nach oben und seitlich begrenzt. Jede zweite Formkammer 14 hat im Querschnitt eine in etwa halbkreisförmige Form. Der Querschnitt verläuft dabei senkrecht zu der zweiten Hauptebene B. In der zweiten Hauptebene B hat jede zweite Formkammer 14 eine zweite Kreisfläche.

Gegenüberliegend zu der zweiten Kreisfläche hat jede zweite Formkammer 14 einen Kopfbereich 21. Bei jeder zweiten Formkammer 14 ist eine Zuführöffnung 22 vorgesehen, die eine Verbindung zwischen der jeweiligen zweiten Formkammer 14 und einer der zweiten Oberfläche 13 gegenüberliegenden Oberseite 23 herstellt.

Der zweite Gieß-Formkörper 3 hat außerdem Formschluss-Gegenelemente 24, die gemäß dieser Ausführungsform vorzugsweise im Wesentlichen in Eckbereichen des zweiten Gieß-Formkörpers 3 angeordnet sind. Die Formschluss-Gegenelemente 24 sind hier als Aufnahmen ausgebildet. Sie sind im Stande in der Schließposition der Gieß-Form 1 mit den Formschluss-Elementen 12 formschlüssig in Eingriff zu stehen.

Von der Oberseite 23 springen Stapel-Vorsprünge 45 senkrecht nach oben vor. Alternativ sind die Stapel-Vorsprünge 45 an dem ersten Gieß-Formkörper 2 angeordnet.

Wenn sich der erste Gieß-Formkörper 2 und der zweite Gieß-Formkörper 3 in ihrer Schließposition befinden, sind die erste Oberfläche 4 und die zweite Oberfläche 13 unmittelbar benachbart zueinander angeordnet und verlaufen parallel zueinander. Jeder Vertiefung bzw. ersten Formkammer 5 ist eine zweite Formkammer 14 zugeordnet, wobei die entsprechenden, offenen Kreisflächen der Formkammern 5, 14 in den Hauptebenen A, B einander überdeckend angeordnet sind. Paarweise angeordnete erste Formkammern 5 und zweite Formkammern 14 bilden dabei Gesamt-Formkammern 25, die im Wesentlichen kugelförmig sind. Die Gieß-Formkörper 2, 3 sind in den Hauptebenen A, B dann durch den formschlüssigen Eingriff der Formschluss-Elemente 12 in die Formschluss-Gegenelemente 24 relativ zueinander fixiert.

Die Zuführöffnungen 22 befinden sich oben an den Gesamt-Formkammern 25. Die Gesamt-Formkammern 25 sind, abgesehen von den Zuführöffnungen 22, nach außen im Wesentlichen abgeschlossen.

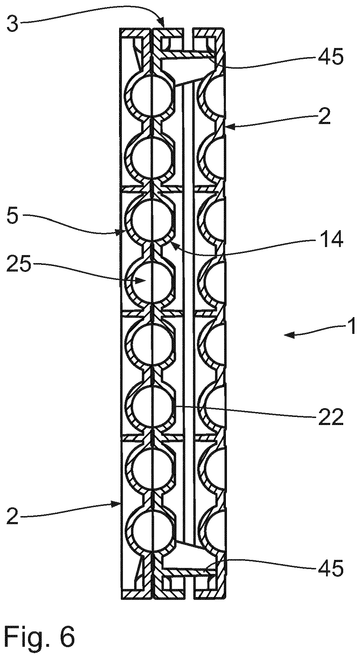

Figur 6 zeigt, wie die Stapel-Vorsprünge 45 unten an einem benachbart angeordneten, ersten Gieß-Formkörper 2 anliegen und diesen so sicher halten. Die Stapel-Vorsprünge 45 liegen gegenüberliegend zu der ersten Oberfläche 4 an dem ersten Gieß-Formkörper 2 an.

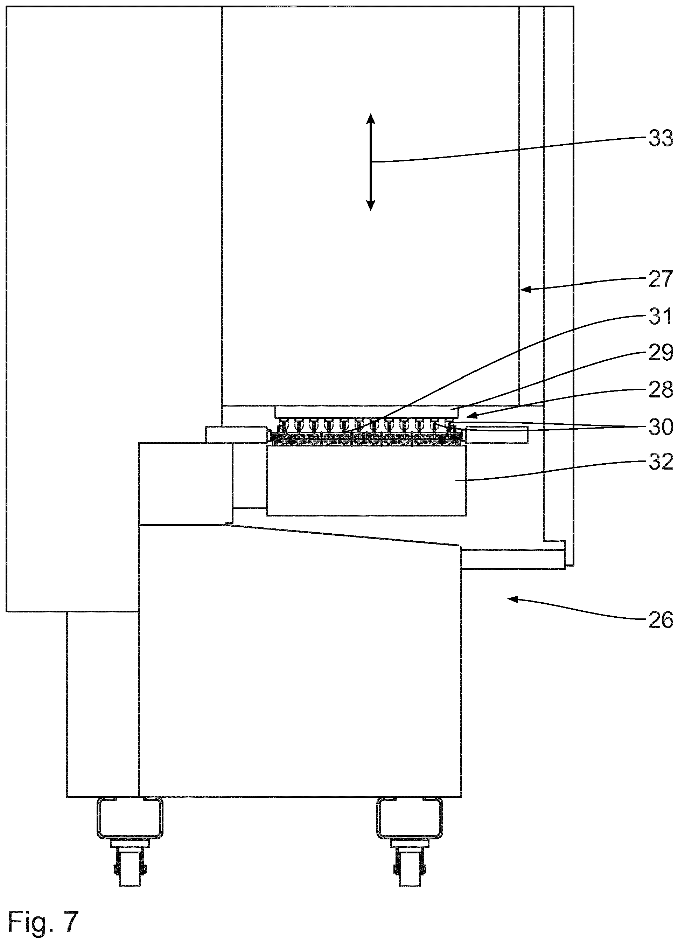

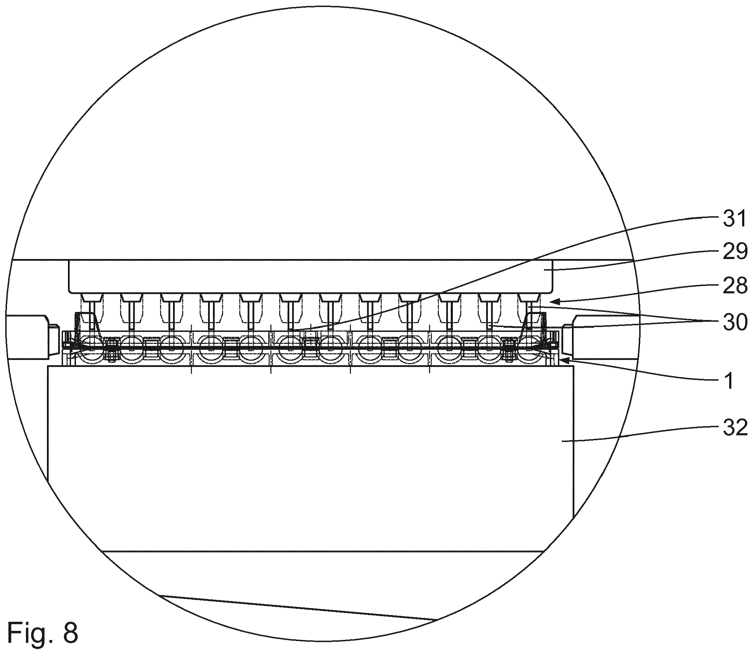

Nachfolgend wird unter Bezugnahme auf die Fig. 7 und 8 eine Gieß-Vorrichtung 26 näher erläutert. Die Gieß-Vorrichtung 26 umfasst eine Verfahreinrichtung 27 und eine Gieß-Fülleinrichtung 28.

Die Gieß-Fülleinrichtung 28 umfasst eine untere Eingieß-Platte 29, die wiederum mehrere, vorzugsweise düsenartige Eingieß-Körper 30 umfasst. Die Eingieß-Körper 30 sind in Reihen und Spalten (nicht dargestellt) angeordnet. Die Eingieß-Körper 30 sind im Wesentlichen identisch zu den Gesamt-Formkammern 25 angeordnet. Die Anzahl der Eingieß-Körper 30 entspricht vorzugsweise der Anzahl der Gesamt-Formkammern 25.

In die Eingieß-Körper 30 ist die gießfähige Fruchtgummi-Masse einbringbar. Dafür stehen die Eingieß-Körper 30 mit einem Fruchtgummi-Masse-Vorratsbehälter (nicht dargestellt) in Strömungsverbindung.

Die Eingieß-Platte 29 mit den Eingieß-Körpern 30 ist durch die Verfahreinrichtung 27 entsprechend des Doppelpfeils 33 vertikal örtlich versetzbar. Es ist von Vorteil, wenn die Verfahreinrichtung 27 mindestens einen Antrieb zum entsprechenden, örtlichen Versetzen der Eingieß-Platte 29 umfasst. Die Gieß-Vorrichtung 26 weist vorzugsweise auch entsprechende Führungen auf.

Unterhalb der Eingieß-Platte 29 ist ein Transportband 32 angeordnet, das vorzugsweise endlos ist und zweckmäßiger Weise antreibbar ist.

In der Gieß-Vorrichtung 26 sind die geschlossenen Gieß-Formen 1 mit der Fruchtgummi-Masse befüllbar. Dafür werden die Gieß-Formen 1 in ihrer Schließposition über das Transportband 32 in eine entsprechende Eingieß-Position in der Gieß-Vorrichtung 26 transportiert. Wenn sich die jeweilige Gieß-Form 1 in der Eingieß-Position (Fig. 7) befindet, ist diese Gieß-Form 1 zwischen der Eingieß-Platte 29 und dem Transportband 32 angeordnet.

Die Eingieß-Körper 30 haben jeweils eine untere Fruchtgummi-Masse-Austrittsöffnung 31. Wenn sich die jeweilige Gieß-Form 1 in ihrer Eingieß-Position befindet, sind die Fruchtgummi-Masse-Austrittsöffnungen 31 vertikal oberhalb der Zufuhröffnungen 22 angeordnet. Die Fruchtgummi-Masse-Austrittsöffnungen 31 und die Zuführöffnungen 22 sind nacheinander ausgerichtet.

Zum Befüllen der Gesamt-Formkammern 25 mit der gießfähigen Fruchtgummi-Masse wird die Eingieß-Platte 29 entsprechend dem Doppelpfeil 33 durch die Verfahreinrichtung 27 nach unten verfahren, so dass die Eingieß-Körper 30 über die Zuführöffnungen 22 in die Gesamt-Formkammern 25 von oben eintauchen. Dann wird die gießfähige Fruchtgummi-Masse in die Gesamt-Formkammer 25 gleichzeitig eingegossen. Die Gesamt-Formkammern 25 werden so von unten nach oben mit der gießfähigen Fruchtgummi-Masse im Wesentlichen vollständig gefüllt, wobei die Eingieß-Platte 29 mit steigendem Füllstand in den Gesamt-Formkammern 25 nach oben durch die Verfahreinrichtung 27 verfahren wird.

Wenn der Eingieß-Vorgang abgeschlossen ist, wird die Eingieß-Platte 29 mit der Verfahreinrichtung 27 wieder ganz nach oben verfahren, so dass die Eingieß-Körper 30 wieder aus den Gesamt-Formkammern 25 austauchen. Anschließend wird die befüllte Gieß-Form 1 mit dem Transportband 32 abtransportiert.

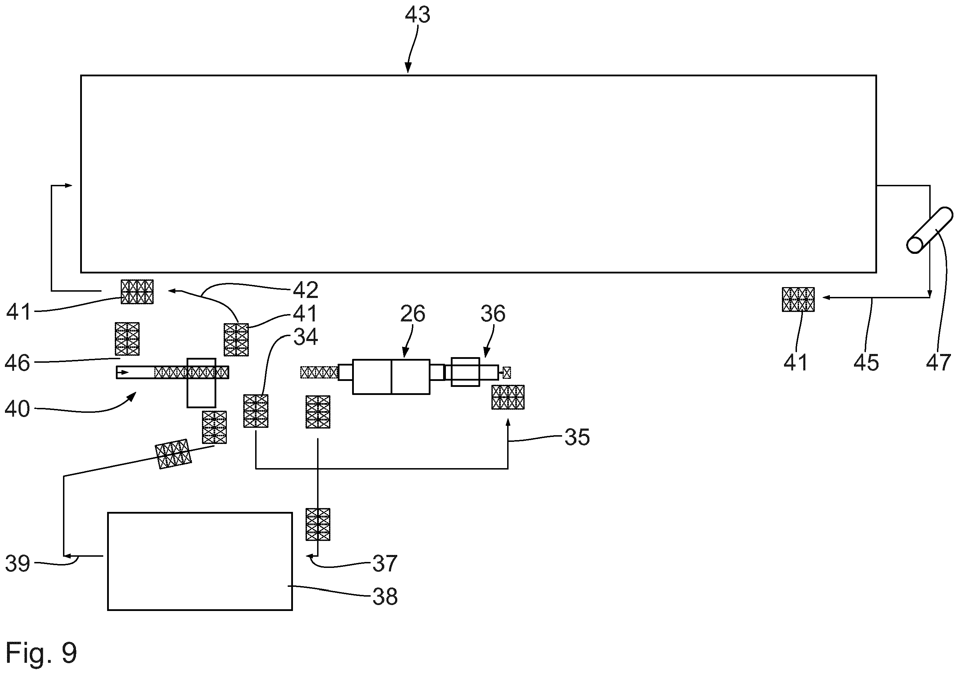

Gemäß Fig. 9 sind zwei Gieß-Vorrichtungen 26 in Reihe geschaltet, die eine Doppel-Gieß-Vorrichtung bilden.

Nachfolgend wird unter Bezugnahme auf Fig. 9 das prinzipielle Verfahren zur Herstellung der Fruchtgummi-Artikel näher beschrieben.

Die Fruchtgummi-Masse wird in einer entsprechenden Auflöse- und Koch-Vorrichtung (nicht dargestellt) in bekannter Weise hergestellt und danach zum Färben, Aromatisieren und Säuern einer Dosier- und MischVorrichtung zugeführt. In dem bereits erwähnten Fruchtgummi-Masse-Vorratsbehälter wird die Fruchtgummi-Masse bevorratet. Der Fruchtgummi-Masse-Vorratsbehälter steht vorzugsweise über Rohrleitungen (nicht dargestellt) mit den Gieß-Vorrichtungen 26 in Strömungsverbindung.

Wie bereits erwähnt, werden die geschlossenen Gieß-Formen 1 zu der Gieß-Vorrichtung 26 auf dem Transportband 32 transportiert.

Die geschlossenen Gieß-Formen 1 werden dabei von einer Sammelstelle 34 in Richtung des Transport-Pfeils 35 zu einer Beölungs-Vorrichtung 36 transportiert, die stromaufwärts zu der Doppel-Gieß-Vorrichtung angeordnet ist und zum Benetzen der geschlossenen, leeren Gieß-Formen 1 mit einem Trennmittel-Trennöl bzw. Antihaftmittel mit großer Trennwirkung ausgebildet ist. In der Beölungs-Vorrichtung 36 ist eine Sprüh-Einrichtung (nicht dargestellt) angeordnet, die mehrere, verfahrbare Düsen-Körper (nicht dargestellt) umfasst. Die Düsen-Körper tauchen über die Zuführöffnung 22 in die Gesamt-Formkammern 25 von oben ein und sprühen so das Trennöl in diese, so dass in den Gesamt-Formkammern 25 die Gieß-Form 1 mit dem Trennöl benetzt wird. Es ist von Vorteil, wenn dabei die die erste Oberfläche 4 und/oder die zweite Oberfläche 13 frei von dem Trennöl bleibt.

Die beölten Gieß-Formen 1 werden dann eingangsseitig in die Doppel-Gieß-Vorrichtung eingeführt.

Wie bereits erwähnt, werden die geschlossenen Gieß-Formen 1 in der Eingieß-Position mit der bevorrateten, gießfähigen Fruchtgummi-Masse gefüllt. Die Fruchtgummi-Masse hat dabei vorzugsweise eine Temperatur, die zwischen 60°C und 90°C liegt.

Die mit der Fruchtgummi-Masse befüllten, geschlossenen Gieß-Formen 1 werden dann entsprechend dem Transport-Pfeil 37 zu einer Kühl-Vorrichtung 38 transportiert, die vorzugsweise als Kühl-Raum ausgebildet ist. In der Kühl-Vorrichtung 38 herrscht eine Temperatur von etwa 5°C. Die Gieß-Formen 1 bleiben in der Gieß-Vorrichtung 38 bis zu drei Stunden. Die Fruchtgummi-Masse erstarrt dabei in den Gesamt-Formkammern 25 und nimmt deren Form an. Es ist von Vorteil, wenn in der Kühl-Vorrichtung 38 eine erste Schockabkühlung erfolgt. Das mindestens eine in der Fruchtgummi-Masse vorhandene Geliermittel sorgt für eine erste Stabilität.

Die geschlossenen, gekühlten Gieß-Formen 1 werden dann mit den ebenso abgekühlten Fruchtgummi-Artikeln entsprechend dem Transport-Pfeil 39 zu einer Entformungs-Vorrichtung 40 transportiert. In der Entformungs-Vorrichtung 40 werden die Gieß-Formen 1 durch Aufklappen maschinell geöffnet, so dass die ersten Gieß-Formkörper 2 und die jeweiligen zweiten Gieß-Formkörper 3 voneinander getrennt werden. In der Entformungs-Vorrichtung 40 tauchen Ausstoß-Stößel durch die Zuführöffnungen 22 in die zweiten Formkammern 14 von oben ein und entfernen so die Fruchtgummi-Artikel aus den zweiten Formkammern 14. Die Fruchtgummi-Artikel sitzen nun in dem ersten Gieß-Formkörper 2. Die Gieß-Formen 1 werden dann an der Sammelstelle 34 gesammelt.

Die bereits erstarrten Fruchtgummi-Artikel werden in der Entformungs-Vorrichtung 40 in offene Trocknungs-Formen 41 überführt, die entsprechend dem Transport-Pfeil 42 in eine Trocknungs-Vorrichtung 43 transportiert werden. Die Trocknungs-Vorrichtung 43 ist als Trocknungs-Raum ausgeführt. In der Trocknungs-Vorrichtung 43 bleiben die bereits gekühlten Fruchtgummi-Artikel bis zu 36 Stunden bei einer Temperatur von etwa 25°C und einer Raumfeuchte von etwa 35%. In der Trocknungs-Vorrichtung 43 erfolgt ein Feuchteentzug von etwa 5% aus dem Kern der Fruchtgummi-Artikel. Die Fruchtgummi-Artikel sind in der Trocknungs-Vorrichtung 43 vorzugsweise im Wesentlichen trockener Luft ausgesetzt. Es ist von Vorteil, wenn die trockene Luft möglichst großflächig an die Fruchtgummi-Artikel gelangt.

Die getrockneten Fruchtgummi-Artikel verlassen dann in den Trocknungs-Formen 41 die Trocknungs-Vorrichtung 43 und werden einer Beölungs-Station 47 zugeführt, die im Wesentlichen als rotierende angetriebene Trommel ausgeführt ist. Dazu werden die noch gefüllten Trocknungs-Formen 41 entleert und die Fruchtgummi-Artikel über eine entsprechende Transport-Einrichtung, wie einem Förderband oder einer Zuführrinne, der Beölungs-Station 47 zugeführt. Durch ständige rotierende Bewegung in der Trommel werden die Fruchtgummi-Artikel mit dem gleichen Trennmittel-Trennöl wie bei der Benetzung der Gieß-Formen 1 benetzt. Die Fruchtgummi-Artikel werden anschließend über ein sogenanntes Austrags-Band ausgetragen und in bereitstehende Vorrats-Behälter gefüllt. Diese werden auf Holzplatten aufgespaltet und entsprechend dem Transport-Pfeil 45 zu einer Verpackungs-Vorrichtung (nicht dargestellt) transportiert. In der Verpackungs-Vorrichtung werden die getrockneten Fruchtgummi-Artikel verpackt.

Die leeren Trocknungs-Formen 41 werden dann zu dem Eingang der Entformungs-Vorrichtung 40 transportiert und dort an der Sammelstelle 46 gesammelt.

## Patentansprüche

1. Verfahren zur Herstellung von Fruchtgummi-Artikeln, umfassend die Schritte
- Bereitstellen von mindestens einer Gieß-Form (1) für die Herstellung von Fruchtgummi-Artikeln aus einer Fruchtgummi-Masse
-- mit einem ersten Gieß-Formkörper (2), der erste Formkammern (5) räumlich begrenzt, und
-- mit einem zweiten Gieß-Formkörper (3), der zweite Formkammern (14) räumlich begrenzt,
-- wobei der erste Gieß-Formkörper (2) und der zweite Gieß-Formkörper (3) zwischen einer Schließposition und einer Öffnungsposition relativ zueinander beweglich sind, und
-- wobei in der Schließposition des ersten Gieß-Formkörpers (2) und des zweiten Gieß-Formkörpers (3) die ersten Formkammern (5) und die zweiten Formkammern (14) unter Bildung von jeweiligen, dreidimensionalen Gesamt-Formkammern (25) benachbart zueinander angeordnet sind, und
- Bereitstellen der Fruchtgummi-Masse,
**gekennzeichnet durch**
- Einbringen der Fruchtgummi-Masse über in den zweiten Formkammern (14) vorgesehene Fruchtgummi-Masse-Zuführöffnungen (22) in die Gesamt-Formkammern (25), wenn sich der erste Gieß-Formkörper (2) und der zweite Gieß-Formkörper (3) in ihrer Schließposition befinden.

2. Verfahren nach Anspruch 1, **dadurch gekennzeichnet, dass** beim Überführen des ersten Gieß-Formkörpers (2) und des zweiten Gieß-Formkörpers (3) in deren Öffnungsposition in die zweiten Formkammern (14) über die Fruchtgummi-Masse-Zuführöffnungen (22) Ausstoß-Stößel zum Entfernen der Fruchtgummi-Artikel aus den zweiten Formkammern (14) eintauchen.

3. Verfahren nach Anspruch 1 oder 2, **dadurch gekennzeichnet, dass** vor dem Einbringen der Fruchtgummi-Masse die ersten und/oder zweiten Formkammern (5, 14) zumindest teilweise mit einem Trennmittel, vorzugsweise mit einem Trennöl, in einer Trennmittel-Vorrichtung (36) benetzt werden.

4. Verfahren nach einem der vorherigen Ansprüche, **dadurch gekennzeichnet, dass** die mindestens eine, mit der Fruchtgummi-Masse befüllte, geschlossene Gieß-Form (1) zu einer Kühl-Vorrichtung (38) transportiert wird, wobei die Fruchtgummi-Masse in den Gesamt-Formkammern (25) erstarrt und deren Form annimmt, wobei vorzugsweise in der Kühl-Vorrichtung (38) eine erste Schockabkühlung erfolgt.

5. Verfahren nach einem der vorherigen Ansprüche, **dadurch gekennzeichnet, dass** die mindestens eine, geschlossene, gekühlte Gieß-Form (1) mit den abgekühlten Fruchtgummi-Artikeln zu einer Entformungs-Vorrichtung (40) transportiert wird, wobei vorzugsweise die bereits erstarrten Fruchtgummi-Artikel in der Entformungs-Vorrichtung (40) in offene Trocknungs-Formen (41) überführt werden.

6. Verfahren nach Anspruch 5, **dadurch gekennzeichnet, dass** die Trocknungs-Formen (41) in eine Trocknungs-Vorrichtung (43) transportiert werden.

7. Verfahren nach einem der vorherigen Ansprüche, **gekennzeichnet durch** mindestens eine Gieß-Fülleinrichtung (28) zum Einbringen der Fruchtgummi-Masse über die Fruchtgummi-Masse-Zuführöffnungen (22) in die Gesamt-Formkammern (25) in der Schließposition des ersten Gieß-Formkörpers (2) und des zweiten Gieß-Formkörpers (3).

8. Verfahren nach Anspruch 7, **dadurch gekennzeichnet, dass** die mindestens eine Gieß-Fülleinrichtung (28) mindestens einen Eingieß-Körper (30) zum Eintauchen in die Gieß-Form (1), vorzugsweise in die Gesamt-Formkammern (25), für eine Befüllung aufweist, wobei der mindestens eine Eingieß-Körper (30) vorzugsweise düsenartig ausgeführt ist, wobei vorzugsweise mindestens eine Verfahreinrichtung (27) den mindestens einen Eingieß-Körper (30) und die Gieß-Form (1) beim Einfüllen der Fruchtgummi-Masse in Abhängigkeit eines Fruchtgummi-Masse-Füllstands in den Gesamt-Formkammern (25) voneinander beabstandet.

9. Verfahren nach Anspruch 8, **dadurch gekennzeichnet, dass** für jede Gesamt-Formkammer (25) einer der Eingieß-Körper (30) vorgesehen ist.

10. Verfahren nach einem der vorherigen Ansprüche, **dadurch gekennzeichnet, dass** der erste Gieß-Formkörper (2) ein Gieß-Formkörper-Unterteil und der zweite Gieß-Formkörper (2) ein Gieß-Formkörper-Oberteil ist.

11. Verfahren nach einem der vorherigen Ansprüche, **dadurch gekennzeichnet, dass** in der Schließposition des ersten Gieß-Formkörpers (2) und des zweiten Gieß-Formkörpers (3) jeder ersten Formkammer (5) eine zweite Formkammer (14) zugeordnet ist.

12. Verfahren nach einem der vorherigen Ansprüche, **dadurch gekennzeichnet, dass** der erste Gieß-Formkörper (2) eine im Wesentlichen planare, in einer ersten Hauptebene A liegende, erste Oberfläche (4) aufweist, wobei die ersten Formkammern (5) von der ersten Oberfläche (4) ausgehen.

13. Verfahren nach einem der vorherigen Ansprüche, **dadurch gekennzeichnet, dass** der zweite Gieß-Formkörper (3) eine im Wesentlichen planare, in einer zweiten Hauptebene B liegende, zweite Oberfläche (13) aufweist, wobei die zweiten Formkammern (14) von der zweiten Oberfläche (13) ausgehen.

14. Verfahren nach einem der vorherigen Ansprüche, **dadurch gekennzeichnet, dass** die ersten Formkammern (5) kugelkalottenartig, vorzugsweise halbkugelkalottenartig, sind.

15. Verfahren nach einem der vorherigen Ansprüche, **dadurch gekennzeichnet, dass** die zweiten Formkammern (14) kugelkalottenartig, vorzugsweise halbkugelkalottenartig, sind, wobei vorzugsweise die zweiten Formkammern (14) Kopfbereiche (21) aufweisen, wobei die Fruchtgummi-Masse-Zuführöffnungen (22) in den Kopfbereichen (21) angeordnet sind.

## Claims

1. Method for the production of fruit gum products, the method comprising the steps of
- providing at least one casting mould (1) for the production of fruit gum products from a fruit gum mixture, the casting mould (1) comprising
-- a first casting mould body (2) that spatially delimits first mould chambers (5), and
-- a second casting mould body (3) that spatially delimits second mould chambers (14),
-- wherein the first casting mould body (2) and the second casting mould body (3) are movable in relation to each other between a closed position and an open position, and
-- wherein in the closed position of the first casting mould body (2) and the second casting mould body (3), the first mould chambers (5) and the second mould chambers (14) are arranged adjacent to each other, thus forming respective three-dimensional total mould chambers (25), and
- providing the fruit gum mixture,
**characterised by**
- filling the fruit gum mixture into the total mould chambers (25) via fruit gum mixture feed openings (22) provided in the second mould chambers (14) when the first casting mould body (2) and the second casting mould body (3) are in their closed position.

2. Method according to claim 1, **characterised in that** when the first casting mould body (2) and the second casting mould body (3) are moved into their open position, ejector plungers move into the second mould chambers (14) via the fruit gum mixture feed openings (22) for removing the fruit gum products from the second mould chambers (14).

3. Method according to claim 1 or 2, **characterised in that** before filling in the fruit gum mixture, the first and/or second mould chambers (5, 14) are at least partly covered with a separating agent, preferably with a separating oil, in a separating agent device (36).

4. Method according to any one of the preceding claims, **characterised in that** the at least one closed casting mould (1) filled with the fruit gum mixture is transported to a cooling device (38), wherein the fruit gum mixture solidifies in the total mould chambers (25) and receives the shape thereof, wherein preferably a first shock cooling is carried out in the cooling device (38).

5. Method according to any one of the preceding claims, **characterised in that** the at least one closed, cooled casting mould (1) is transported together with the cooled fruit gum products to a mould removing device (40), wherein preferably the already solidified fruit gum products are transferred to open drying moulds (41) in the mould removing device (40).

6. Method according to claim 5, **characterised in that** the drying moulds (41) are transported into a drying device (43).

7. Method according to any one of the preceding claims, **characterised by** at least one casting and filling device (28) for filling the fruit gum mixture into the total mould chambers (25) via the fruit gum mixture feed openings (22) when the first casting mould body (2) and the second casting mould body (3) are in the closed position.

8. Method according to claim 7, **characterised in that** the at least one casting and filling device (28) has at least one pouring body (30) movable into the casting mould (1), preferably into the total mould chambers (25), for a filling thereof, wherein the at least one pouring body (30) is preferably configured in the manner of a nozzle, wherein preferably at least one displacement device (27) ensures that when the fruit gum mixture is being filled in, the at least one pouring body (30) and the casting mould (1) are spaced from each other depending on a fruit gum mixture fill level in the total mould chambers (25).

9. Method according to claim 8, **characterised in that** for each of the total mould chambers (25), there is provided a respective one of the pouring bodies (30).

10. Method according to any one of the preceding claims, **characterised in that** the first casting mould body (2) is a casting mould body lower part while the second casting mould body (2) is a casting mould body upper part.

11. Method according to any one of the preceding claims, **characterised in that** in the closed position of the first casting mould body (2) and of the second casting mould body (3), each first mould chamber (5) is associated to a respective second mould chamber (4).

12. Method according to any one of the preceding claims, **characterised in that** the first casting mould body (2) has a substantially plane first surface (4) disposed in a first main plane A, wherein the first mould chambers (5) emanate from the first surface (4).

13. Method according to any one of the preceding claims, **characterised in that** the second casting mould body (3) has a substantially plane second surface (13) disposed in a second main plane B, wherein the second mould chambers (14) emanate from the second surface (13).

14. Method according to any one of the preceding claims, **characterised in that** the first mould chambers (5) are in the shape of a spherical cap, preferably in the shape of a semi-spherical cap.

15. Method according to any one of the preceding claims, **characterised in that** the second mould chambers (14) are in the shape of a spherical cap, preferably in the shape of a semi-spherical cap, wherein preferably the second mould chambers (14) have head areas (21), wherein the fruit gum mixture feed openings (22) are arranged in the head areas (21).

## Revendications

1. Procédé de fabrication d'articles gélifiés aux fruits, comprenant les étapes de
- fourniture d'au moins un moule (1) pour la fabrication d'articles gélifiés aux fruits à partir d'une masse gélifiée aux fruits
-- comprenant un premier corps de moule (2), qui délimite dans l'espace des premières chambres de moulage (5), et
-- comprenant un deuxième corps de moule (3), qui délimite dans l'espace des deuxièmes chambres de moulage (14),
-- dans lequel le premier corps de moule (2) et le deuxième corps de moule (3) sont mobiles l'un par rapport à l'autre entre une position fermée et une position ouverte, et
-- dans lequel les premières chambres de moulage (5) et les deuxièmes chambres de moulage (14), lorsque le premier corps de moule (2) et le deuxième corps de moule (3) se trouvent dans la position fermée, sont agencées au voisinage les unes des autres, ce qui entraîne la formation de chambres de moulage globales (25) tridimensionnelles respectives, et
- fourniture de la masse gélifiée aux fruits,
**caractérisé par**
- l'introduction de la masse gélifiée aux fruits dans les chambres de moulage globales (25) par les ouvertures d'amenée de masse gélifiée aux fruits (22) ménagées dans les deuxièmes chambres de moulage (14), lorsque le premier corps de moule (2) et le deuxième corps de moule (3) se situent dans leur position fermée.

2. Procédé selon la revendication 1, **caractérisé en ce que**, lors du passage du premier corps de moule (2) et du deuxième corps de moule (3) dans leur position ouverte, des poussoirs d'éjection permettant de retirer les articles gélifiés aux fruits des deuxièmes chambres de moulage (14) s'enfoncent dans les deuxièmes chambres de moulage (14) par les ouvertures d'amenée de masse gélifiée aux fruits (22).

3. Procédé selon la revendication 1 ou 2, **caractérisé en ce que**, avant l'introduction de la masse gélifiée aux fruits, les premières et/ou deuxièmes chambres de moulage (5, 14) sont imprégnées au moins en partie d'un agent de séparation, de préférence d'une huile de séparation, dans un dispositif à agent de séparation (36).

4. Procédé selon l'une quelconque des revendications précédentes, **caractérisé en ce que** ledit au moins un moule (1) fermés, rempli de masse gélifiée aux fruits, est transporté vers un dispositif de refroidissement (38), dans lequel la masse gélifiée aux fruits se solidifie dans les chambres de moulage globales (25) et adopte leur forme, dans lequel un premier refroidissement ultrarapide intervient de préférence dans le dispositif de refroidissement (38).

5. Procédé selon l'une quelconque des revendications précédentes, **caractérisé en ce que** ledit au moins un moule (1) fermé, refroidi contenant les articles gélifiés aux fruits refroidis est transporté vers un dispositif de démoulage (40), dans lequel les articles gélifiés aux fruits déjà solidifiés dans le dispositif de démoulage (40) sont de préférence transférés dans des moules de séchage (41) ouverts.

6. Procédé selon la revendication 5, **caractérisé en ce que** les moules de séchage (41) sont transportés dans un dispositif de séchage (43).

7. Procédé selon l'une quelconque des revendications précédentes, **caractérisé par** au moins un dispositif de remplissage de moule (28) destiné à introduire la masse gélifiée aux fruits par les ouvertures d'amenée de masse gélifiée aux fruits (22) dans les chambres de moulage globales (25) lorsque le premier corps de moule (2) et le deuxième corps de moule (3) se trouvent dans la position fermée.

8. Procédé selon la revendication 7, **caractérisé en ce que** ledit au moins un dispositif de remplissage de moule (28) comprend au moins un corps de versement (30) destiné à s'enfoncer dans le moule (1), de préférence dans les chambres de moulage globales (25), pour les remplir, dans lequel ledit au moins un corps de versement (30) est réalisé de préférence à la façon d'une buse, dans lequel au moins un système de déplacement (27) sépare de préférence ledit au moins un corps de versement (30) et le moule (1) l'un de l'autre lors du versement de la masse gélifiée aux fruits en fonction d'un niveau de masse gélifiée aux fruits dans les chambres de moulage globales (25).

9. Procédé selon la revendication 8, **caractérisé en ce qu'**un des corps de versement (30) est prévu pour chaque chambre de moulage globale (25).

10. Procédé selon l'une quelconque des revendications précédentes, **caractérisé en ce que** le premier corps de moule (2) est une partie inférieure de corps de moule et le deuxième corps de moule (2) est une partie supérieure de corps de moule.

11. Procédé selon l'une quelconque des revendications précédentes, **caractérisé en ce que**, lorsque le premier corps de moule (2) et le deuxième corps de moule (3) se trouvent dans la position fermée, une deuxième chambre de moulage (14) est associée à chaque première chambre de moulage (5).

12. Procédé selon l'une quelconque des revendications précédentes, **caractérisé en ce que** le premier corps de moule (2) présente une première surface (4) sensiblement plane, située dans un premier plan principal A, dans lequel les premières chambres de moulage (5) partent de la première surface (4).

13. Procédé selon l'une quelconque des revendications précédentes, **caractérisé en ce que** le deuxième corps de moule (3) présente une deuxième surface (13) sensiblement plane, située dans un deuxième plan principal B, dans lequel les deuxièmes chambres de moulage (14) partent de la deuxième surface (13).

14. Procédé selon l'une quelconque des revendications précédentes, **caractérisé en ce que** les premières chambres de moulage (5) sont en forme de calotte sphérique, de préférence en forme de demi-calotte sphérique.

15. Procédé selon l'une quelconque des revendications précédentes, **caractérisé en ce que** les deuxièmes chambres de moulage (14) sont en forme de calotte sphérique, de préférence en forme de demi-calotte sphérique, dans lequel les deuxièmes chambres de moulage (14) présentent de préférence des zones supérieures (21), dans lequel les ouvertures d'amenée de masse gélifiée aux fruits (22) sont ménagées dans les zones supérieures (21).
